(19) Europäisches Patentamt
European Patent Office
Office européen des brevets

(11) Veröffentlichungsnummer : **0 544 618 A1**

(12) **EUROPÄISCHE PATENTANMELDUNG**

(21) Anmeldenummer : **92810898.4**

(22) Anmeldetag : **18.11.92**

(51) Int. Cl.$^5$ : **C08L 63/00,** C08K 3/22, H01B 3/40, C08G 59/42, C08G 59/50

(30) Priorität : **27.11.91 CH 3470/91**

(43) Veröffentlichungstag der Anmeldung : **02.06.93 Patentblatt 93/22**

(84) Benannte Vertragsstaaten : **CH DE ES FR GB IT LI NL**

(71) Anmelder : **CIBA-GEIGY AG**
**Klybeckstrasse 141**
**CH-4002 Basel (CH)**

(72) Erfinder : **Baumann, Dieter**
**Bürklistrasse 6**
**CH-4313 Möhlin (CH)**
Erfinder : **Hollstein, Werner, Dr.**
**Im Hubhof 12**
**W-7800 Freiburg (DE)**
Erfinder : **Rabener, Claus Willi, Dr.**
**Schmiedackerstrasse 21**
**W-7858 Oetlingen (DE)**
Erfinder : **Rüger, Peter**
**Stallenmattstrasse 12**
**CH-4104 Oberwil (CH)**

(54) **Hochgefüllte Epoxid-Giessharzmassen.**

(57) Die Erfindung betrifft flammgehemmte Zusammensetzungen enthaltend
A) ein Epoxidharzgemisch bestehend aus,
A1) 15-35 Gew.-% mindestens eines flüssigen Epoxidharzes,
A2) 55-85 Gew.-% Aluminiumoxidtrihydrat,
A3) 0-20 Gew.-% mindestens eines weiteren Füllstoffes,
A4) 0-5 Gew.-% mindestens eines üblichen Additivs
und
B) mindestens einen Carbonsäureanhydrid
oder
ein cycloaliphatisches Diamin der Formeln I oder II

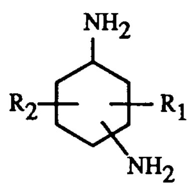 (I), 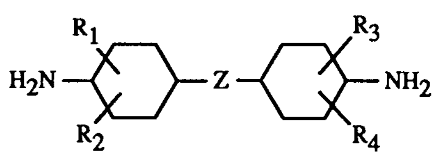 (II),

worin die Reste $R_1$ bis $R_4$ unabhängig voneinander Wasserstoff oder $C_1$-$C_4$-Alkyl bedeuten und Z für eine direkte Bindung, $-CH_2-$, $-C(CH_3)_2-$, -S-, -O-, $-SO_2-$ oder -CO- steht, in einer zur Härtung der Komponente A ausreichenden Menge,
wobei der Gehalt an Komponenten A2 und A3 zusammen 63-80 Gew.-%, bezogen auf das Gesamtgewicht der Zusammensetzung, beträgt.
Diese Zusammensetzungen sind für die Verwendung in Hochspannungsbauteilen, wie Flyback Transformern, geeignet.

EP 0 544 618 A1

Die Erfindung betrifft hochgefüllte Epoxid-Giessharzzusammensetzungen, die im gehärteten Zustand eine ausgezeichnete Flammhemmung aufweisen, ein Verfahren zur Herstellung von gehärteten Produkten unter Verwendung dieser Zusammensetzungen und die Verwendung dieser Zusammensetzungen als Umhüllungsmaterial für elektrische und elektronische Bauteile, insbesondere für Flyback Transformer (Transformatoren).

Bei der Verwendung von Epoxidharzen als Giessharzmassen, z.B. für Hochspannungsbauteile, wie Flyback Transformer für Fernsehgeräte oder Automobilzündspulen, ist es notwendig, dass diese Massen eine sehr gute Flammhemmung und Feuchtebeständigkeit besitzen. Darüber hinaus sollten keine Einschränkungen bezüglich der Imprägnierfähigkeit dieser Massen auftreten.

Eine übliche Testmethode zur Einschätzung der Flammfestigkeit eines Materials ist die Methode UL 94 der Underwriters Laboratory (siehe hierzu z.B. Ullmann's Encyclopedia of Industrial Chemistry, 5. Ed., Vol. A 11. Seiten 126 ff.). So bedeutet die Klassifizierung UL 94 V-0 (1,6 mm) eines Materials, dass Prüfkörper der Dimension 127 mm x 12,7 mm x 1,6 mm, welche vertikal montiert sind und am unteren Ende mit Hilfe eines Bunsenbrenners entzündet worden sind, nach weniger als 10 Sekunden erloschen sein müssen.

Herkömmliche Epoxid-Giessharzmassen, die sich durch eine Klassifikation UL 94 V-0 (1,6 mm) bezüglich der Flammfestigkeit auszeichnen und beispielsweise für die Umhüllung von Flyback Transformern geeignet sind, basieren im allgemeinen auf Halogen-, Antimontrioxid- und/oder phosphorhaltigen Formulierungen. Diese werden vermehrt als toxikologisch bedenklich eingestuft, da entweder Substanzen wie Antimontrioxid enthalten sind oder bei der Verarbeitung Phosphine aus phosphorhaltigen Zusätzen entstehen können oder beim Verbrennen aus halogenhaltigen Zusätzen Dibenzofurane oder Dioxine freigesetzt werden können. Deshalb wird nach alternativen Formulierungen gesucht, die Füllstoffe aufweisen, welche als toxikologisch unbedenklich eingestuft werden.

In der US 3,677,999 werden härtbare Giessharzformmassen zum Herstellen von nichtbrennbaren elektrischen Bauteilen auf der Basis von Aluminiumoxid enthaltenden Epoxid-, Polyester-, Phenol-, Polyurethan- oder Siliconharzformmassen beschrieben, die jedoch einen relativ geringen Füllstoffanteil aufweisen.

In der DE 37 33 789 werden Reaktionsharzmassen zur Herstellung von schwerentflammbaren halogenfreien Reaktionsharzformstoffen beschrieben. Als Härter wird Isophorondiamin verwendet.

Es wurde nun überraschend gefunden, dass bestimmte hochgefüllte Epoxidharzzusammensetzungen auf der Basis von Aluminiumoxidtrihydrat ohne den Zusatz von toxikologisch bedenklichen Additiven die Flammhemmungsklassifizierung UL 94 V-0 (1,6 mm) erfüllen und dabei keine wesentlichen Einschränkungen in Bezug auf Imprägnierfähigkeit und Feuchtebeständigkeit aufweisen.

Gegenstand der vorliegenden Erfindung sind somit flammgehemmte Zusammensetzungen enthaltend

A) ein Epoxidharzgemisch bestehend aus
- A1) 15-35 Gew.-% mindestens eines flüssigen Epoxidharzes,
- A2) 55-85 Gew.-% Aluminiumoxidtrihydrat,
- A3) 0-20 Gew.-% mindestens eines weiteren Füllstoffes,
- A4) 0-5 Gew.-% mindestens eines üblichen Additivs,

und

B) mindestens ein Carbonsäureanhydrid

oder

ein cycloaliphatisches Diamin der Formeln I oder II

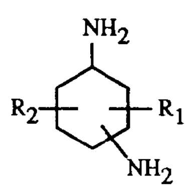 (I), 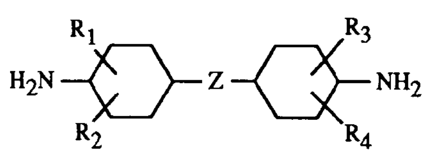 (II),

worin die Reste $R_1$ bis $R_4$ unabhängig voneinander Wasserstoff oder $C_1$-$C_4$-Alkyl bedeuten und Z für eine direkte Bindung, $-CH_2-$, $-C(CH_3)_2-$, -S-, -O-, $-SO_2-$ oder -CO- steht, in einer zur Härtung der Komponente A ausreichenden Menge,

wobei der Gehalt an Komponenten A2 und A3 zusammen 63-80 Gew.-%, bezogen auf das Gesamtgewicht der Zusammensetzung, beträgt.

Bedeutet in der obigen Definition ein Substituent $C_1$-$C_4$-Alkyl, so kann dieser gradkettig oder verzweigt sein. Beispielsweise handelt es sich um Methyl, Ethyl, n-Propyl, Isopropyl, n-Butyl, sec-Butyl, Isobutyl oder tert.-Butyl.

Bevorzugt sind Zusammensetzungen enthaltend als Komponente B ein Carbonsäureanhydrid in einer zur Härtung der Komponente A ausreichenden Menge.

Insbesondere bevorzugt sind Zusammensetzungen, wobei der Anteil der Komponenten A2 und A3 zusammen 63-70 Gew.-%, bezogen auf das Gesamtgewicht der Zusammensetzung, beträgt.

Weiterhin bevorzugt sind Zusammensetzungen, enthaltend als Komponente A ein Epoxidharzgemisch bestehend aus

A1) 18-30 Gew.-% mindestens eines flüssigen Epoxidharzes,
A2) 60-80 Gew.-% Aluminiumoxidtrihydrat,
A3) 0-15 Gew.-% mindestens eines weiteren Füllstoffes und
A4) 0-3 Gew.-% mindestens eines üblichen Additivs.

Bei den flüssigen Epoxidharzen, die in den erfindungsgemässen Zusammensetzungen Verwendung finden, handelt es sich um Verbindungen, die im Durchschnitt mehr als eine 1,2-Epoxidgruppe im Molekül besitzen.

Solche Harze können eine aliphatische, aromatische, cycloaliphatische, araliphatische oder heterocyclische Stuktur haben; sie enthalten Epoxidgruppen als Seitengruppen, oder diese Gruppen bilden einen Teil eines alicyclischen oder heterocyclischen Ringsystems. Die Epoxidgruppen sind vorzugsweise als Glycidylgruppen über Ether- oder Esterbindungen mit dem Restmolekül verbunden, oder es handelt sich um N-Glycidylderivate von heterocyclischen Aminen, Amiden oder Imiden. Epoxidharze dieser Typen sind allgemein bekannt und im Handel erhältlich.

Bevorzugte Epoxidharze enthalten wenigstens zwei Reste der Formel III

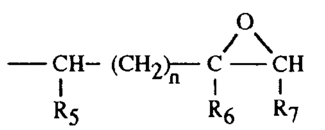 ,

(III)

wobei diese Reste direkt an Sauerstoff-, Stickstoff- oder Schwefelatome gebunden sind, worin $R_5$ und $R_7$ beide Wasserstoff sind, $R_6$ Wasserstoff oder Methyl und n = 0 ist, oder worin $R_5$ und $R_7$ zusammen $-CH_2-CH_2-$ oder $-CH_2-CH_2-CH_2-$ bedeuten, $R_6$ dann Wasserstoff und n = 0 oder 1 ist.

Beispielhaft für Epoxidharze dieses Typs sind zu erwähnen:

I) Polyglycidyl- und Poly-(β-methylglycidyl)-ester erhältlich durch Umsetzung einer Verbindung mit mindestens zwei Carboxylgruppen im Molekül und Epichlorhydrin bzw. Glycerindichlorhydrin bzw. β-Methyl-epichlorhydrin. Die Umsetzung erfolgt zweckmässig in Gegenwart von Basen.

Als Verbindungen mit mindestens zwei Carboxylgruppen im Molekül können aliphatische Polycarbonsäuren verwendet werden. Beispiele für diese Polycarbonsäuren sind Glutarsäure, Adipinsäure, Pimelinsäure, Korksäure, Azelainsäure, Sebazinsäure oder dimerisierte bzw. trimerisierte Linolsäure.

Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.

Weiterhin können aromatische Polycarbonsäuren Verwendung finden, wie beispielsweise Phthalsäure, Isophthalsäure, Trimellitsäure oder Pyromellitsäure.

Ebenfalls können auch carboxylterminierte Addukte, z.B. von Trimellitsäure und Polyolen, wie beispielsweise Glycerin oder 2,2-Bis-(4-hydroxycyclohexyl)-propan, verwendet werden.

II) Polyglycidyl- oder Poly-(β-methylglycidyl)-ether erhältlich durch Umsetzung einer Verbindung mit mindestens zwei freien alkoholischen Hydroxygruppen und/oder phenolischen Hydroxygruppen und einem geeignet substituierten Epichlorhydrin unter alkalischen Bedingungen, oder in Anwesenheit eines sauren Katalysators und anschliessender Alkalibehandlung.

Ether dieses Typs leiten sich beispielsweise ab von acyclischen Alkoholen, wie Ethylenglykol, Diethylengykol und höheren Poly-(oxyethylen)-glykolen, Propan-1,2-diol, oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Bistrimethylolpropan, Pentaerythrit, Sorbit, sowie von Polyepichlorhydrinen.

Sie leiten sich aber auch beispielsweise ab von cycloaliphatischen Alkoholen, wie 1,3- oder 1,4-Dihydroxycyclohexan, Bis-(4-hydroxycyclohexyl)-methan, 2,2-Bis-(4-hydroxycyclohexyl)-propan oder 1,1-Bis-(hydroxymethyl)-cyclohex-3-en, oder sie besitzen aromatische Kerne, wie N,N-Bis-(2-hydroxyethyl)-anilin oder p,p'-Bis-(2-hydroxyethylamino)-diphenylmethan.

Die Epoxidverbindungen können sich auch von einkernigen Phenolen ableiten, wie beispielsweise von Resorcin oder Hydrochinon, oder sie basieren auf mehrkernigen Phenolen, wie beispielsweise auf Bis-(4-hydroxyphenyl)-methan (Bisphenol F), 2,2-Bis(4-hydroxyphenyl)-propan (Bisphenol A), oder auf

unter sauren Bedingungen erhaltenen Kondensationsprodukten von Phenolen oder Kresolen mit Formaldehyd, wie Phenol-Novolake und Kresol-Novolake.

III) Poly-(N-glycidyl)-Verbindungen sind beispielsweise erhältlich durch Dehydrochlorierung der Reaktionsprodukte von Epichlorhydrin mit Aminen, die mindestens zwei Aminwasserstoffatome enthalten. Bei diesen Aminen handelt es sich zum Beispiel um n-Butylamin, Anilin, Toluidin, m-Xylylendiamin, Bis-(4-aminophenyl)-methan oder Bis-(4-methylaminophenyl)-methan.

Zu den Poly-(N-glycidyl)-Verbindungen zählen aber auch N,N'-Diglycidylderivate von Cycloalkylenharnstoffen, wie Ethylenharnstoff oder 1,3-Propylenharnstoff, und N,N'-Diglycidylderivate von Hydantoinen, wie von 5,5-Dimethylhydantoin.

IV) Beispiele für Poly-(S-glycidyl)-Verbindungen sind Di-S-glycidylderivate, die sich von Dithiolen, wie beispielsweise Ethan- 1,2-dithiol oder Bis-(4-mercaptomethylphenyl)-ether, ableiten.

V) Beispiele für Epoxidharze mit einem Rest der Formel III, worin $R_5$ und $R_7$ zusammen $-CH_2-CH_2-$ bedeuten und n = 0 ist, sind Bis-(2,3-epoxicyclopentyl)-ether, 2,3-Epoxicyclopentylglycidylether oder 1,2-Bis-(2,3-epoxicyclopentyloxy)-ethan. Ein Epoxidharz mit einem Rest der Formel III, worin $R_5$ und $R_7$ zusammen $-CH_2-CH_2-$ sind und n = 1 bedeutet, ist beispielsweise 3,4-Epoxi-6-methyl-cyclohexancarbonsäure-(3',4'-epoxi-6'-methyl-cyclohexyl)-methylester.

Es lassen sich aber auch Epoxidharze verwenden, bei denen die 1,2-Epoxidgruppen an unterschiedliche Heteroatome bzw. funkionelle Gruppen gebunden sind. Zu diesen Verbindungen zählen beispielsweise das N,N,O-Triglycidylderivat des 4-Aminophenols, der Glycidylether-glycidylester der Salicylsäure, N-Glycidyl-N'-(2-glycidyloxypropyl)-5,5-dimethylhydantoin oder 2-Glycidyloxy-1,3-bis-(5,5-dimethyl-1-glycidylhydantoin-3-yl)propan.

Ferner sind auch flüssige vorreagierte Addukte solcher Epoxidharze mit Härtern für Epoxidharze geeignet.

Falls gewünscht, kann eine Mischung von Epoxidharzen in den erfindungsgemässen Zusammensetzungen verwendet werden.

Bevorzugt sind Zusammensetzungen enthaltend als Komponente A1 mindestens ein Epoxidharz auf der Basis eines Bisphenols.

Besonders bevorzugt sind Zusammensetzungen enthaltend als Komponente A1 ein Gemisch aus einem Bisphenol-A-diglycidylether, einem Bisphenol-F-diglycidylether und Butan-1,4-diol-diglycidylether.

Weiterhin bevorzugt sind Zusammensetzungen, enthaltend als Komponente A2 Aluminiumoxidtrihydrat ($Al_2O_3 \cdot H_2O$) mit einer Korngrösse von kleiner als 100 $\mu$m. Solche Aluminiumoxidtrihydrate sind allgemein bekannt und zum Teil im Handel erhältlich, wie beispielsweise Apyral® der Fa. VAW.

Als weitere Füllstoffe A3, die in den erfindungsgemässen Zusammensetzungen neben Aluminiumoxidtrihydrat Verwendung finden können, eignen sich beispielsweise Wollastonit (natürlich vorkommendes oder in Handel erhältliches Calciummetasilikat), Kunststoff-Fasern, wie Polyvinylalkohol-, Polyamid- und Polyesterfasern, Glasfasern, Borfasern, Kohlenstoff-Fasern, Glaspulver, Quarzmehl, Quarzgutmehl (kristallin-amorphes Quarzmehl), Glimmer, Schiefermehl, Kaolin, schamottisiertes Kaolin, Dolomit, Diopsid, Talk, Calciumcarbonat, Kreidemehl, Gips, Bentone, Kieselsäureaerogel (Aerosile),

Bariumsulfat, Lithopone, Schwerspat, Titandioxid oder Russ. Dem Fachmann ist dabei bekannt, dass für Isolier-Anwendungen in der Elektrotechnik ekektrisch leitende Füllstoffe vermieden werden sollten.

Bevorzugt sind Zusammensetzungen, enthaltend als Komponente A3 reines Quarzmehl.

Die erfindungsgemässen Zusammensetzungen können noch mit üblichen Additiven gemäss A4 versetzt werden, wie z.B. Farbstoffen, Pigmenten, Weichmachern, Antischaummittel, Antiabsetzmittel, Verlaufsmitteln, wie beispielsweise Silicone, Wachse und Stereate, welche zum Teil auch als Formtrennmitteln Verwendung finden, Thixotropiemitteln, Antioxidantien, Lichtschutzmittel und Harfvermittlern, wie beispielsweise Silane.

Bevorzugt sind Zusammensetzungen, enthaltend als Komponente A4 einen Haftvermittler.

Besonders bevorzugt sind Zusammensetzungen, enthaltend als Hafvermittler $\gamma$-Glycidoxypropyltrimethoxysilan.

Die Carbonsäureanhydride, die sich zur Härtung der Epoxidharzmassen einsetzen lassen, leiten sich von organischen Polycarbonsäuren, insbesondere Dicarbonsäuren ab. Als Polycarbonsäuren können ganz allgemein aliphatische, cycloaliphatische, aromatische oder araliphatische Verbindungen mit wenigstens zwei Carboxylgruppen, insbesondere zwei Carboxylgruppen, verwendet werden.

Beispiele für Polycarbonsäuren sind gesättigte aliphatische Dicarbonsäuren, wie Oxalsäure, Malonsäure, Bernsteinsäure, $\alpha$-Methylbernsteinsäure, Glutarsäure, Adipinsäure, Pimelinsäure, Azelainsäure, Sebazinsäure oder dimerisierte Linolsäure; oder ungesättigte aliphatische Dicarbonsäuren, wie Maleinsäure, Mesaconsäure (Methylfumarsäure), Citraconsäure (Methylmaleinsäure) oder Itaconsäure (Methylenbernsteinsäure); oder cycloaliphatische Dicarbonsäuren, wie Hexahydrophthal-, Hexahydroisophthal-

oder Hexahydroterephthalsäure, oder Tetrahydrophthal-, Tetrahydroisophthal- oder Tetrahydroterephthalsäure, oder 4-Methyltetrahydrophthalsäure, 4-Methylhexahydrophthalsäure oder Nadicsäure (Bicyclo[2.2.1]hept-5-en-2,3-dicarbonsäure), oder aromatische Dicarbonsäuren, wie Phthal-, Isophthal- oder Terephthalsäure.

Beispiele für Tri- und höhere Carbonsäuren sind insbesondere aromatische Tri- oder Tetracarbonsäuren, wie Trimellitsäure, Trimesinsäure, Pyromellitsäure oder Benzophenontetracarbonsäure, sowie dimerisierte oder trimerisierte Fettsäuren.

Bevorzugt sind Zusammensetzungen enthaltend als Komponente B ein cycloaliphatisches Carbonsäureanhydrid.

Weiterhin bevorzugt sind Zusammensetzungen enthaltend als Komponente B ein cycloaliphatisches Diamin ausgewählt aus der Gruppe bestehend aus 1,2-Diaminocyclohexan, 1,4-Diaminocyclohexan, Bis(4-aminocyclohexyl)methan und Bis(4-amino-3-methylcyclohexyl)methan.

Besonders bevorzugt sind Zusammensetzungen enthaltend als Komponente B Bis(4-aminocyclohexyl)methan oder Bis(4-amino-3-methylcyclohexyl)methan.

In den erfindungsgemässen Zusammensetzungen liegt die Komponente A zur Komponente B in den üblich wirksamen Mengenverhältnissen vor. Beispielsweise kann das Mengenverhältnis so gewählt werden, dass auf ein Äquivalent Epoxidgruppe 0,5 bis 1,2 Äquivalente Anhydridgruppen entfallen. Das Verhältnis der Komponenten A und B hängt beispielsweise von der erforderlichen Härtungsgeschwindigkeit und den im Endprodukt gewünschten Eigenschaften ab und kann vom Fachmann leicht ermittelt werden.

Gegenbenenfalls kann den erfindungsgemässen Zusammensetzungen ein Härtungsbeschleuniger zugesetzt werden. Eine weitere Ausführungsform der vorliegenden Erfindung sind daher Zusammensetzungen gemäss der oben angegebenen Definition enthaltend zusätzlich

C) mindestens einen Härtungsbeschleuniger.

Geeignete Härtungsbeschleuniger sind an sich beliebige Verbindungen, welche die Härtungsreaktion zu beschleunigen vermögen. Beispiele sind: komplexe von Aminen, besonders tertiären Aminen, Monoethylamin, Trimethylamin und Octyldimethylamin, mit Bortrifluorid oder Bortrichlorid, ferner tertiäre Amine, wie Benzyldimethylamin, Tris(dimethylaminomethyl)phenol, Hexamethylentetramin oder 1,6-Bis(dimethylamino)hexan; Harnstoffderivate, wie N-4-Chlorphenyl-N',N'dimethylharnstoff (Monuron), N-3-Chlor-4-methylphenyl-N',N'-dimethylharnstoff (Chlortoluron), N-(2-Hydroxyphenyl)-N',N'-dimethylharnstoff und N-(2-Hydroxy-4-nitrophenyl)-N',N'-dimethylharnstoff, und gegebenenfalls substituierte Imidazole, wie Imidazol, Benzimidazol, 1-Methylimidazol, 3-Methylimidazol, 2-Ethyl-4-methylimidazol, 2-Vinylimidazol, 2-Phenylimidazol, 2-Phenyl-4-methylimidazol, 1-(2,6-Dichlorbenzoyl)-2-phenylimidazol und 1-(2,4,6-Trimethylbenzoyl)-2-phenylimidazol.

Tertiäre Amine, besonders Benzyldimethylamin, und Imidazole, besonders 2-Phenylimidazol, 1-Methylimidazol, 3-Methylimidazol und 2-Ethyl-4-methylimidazol, sind als Härtungsschleuniger bevorzugt.

Bevorzugt sind Zusammensetzungen, die einen Gehalt an Komponente C zwischen 0,05 und 5 Gew.-%, bezogen auf das Gesamtgewicht der Zusammensetzung, aufweisen.

Die Herstellung der erfindungsgemässen Zusammensetzungen kann in üblicher Weise durch Vermischen der Komponenten mit Hilfe bekannter Mischaggregate, beispielsweise mittels Rührer, Kneter, Walzen oder Mühlen, erfolgen.

Die Härtung der erfindungsgemässen Zusammensetzungen kann auf an sich bekannte Weise ein- oder mehrstufig vorgenommen werden. Die Härtung erfolgt im allgemeinen durch Erhitzen auf Temperaturen zwischen 80 und 200 °C, insbesondere zwischen 90 und 160 °C.

Gegenstand der vorliegenden Erfindung ist daher auch ein Verfahren zur Herstellung gehärteter Produkte unter Verwendung der erfindungsgemässen Zusammensetzungen.

Es war nicht vorhersehbar, dass bei gleichzeitiger Einhaltung sehr guter anwendungstechnischer Eigenschaften auf die Verwendung toxikologisch bedenklicher Komponenten verzichtet werden kann. Dadurch können bei der Herstellung, Verwendung und Entsorgung der Materialien Mensch und Umwelt entlastet werden. Desweiteren erlaubt die aus dem hohen Füllgrad resultierende hohe Wärmeleitfähigkeit eine schnellere Härtung des erfindungsgemässen Epoxidharzsystems, da die freiwerdende Reaktionswärme besser abgeführt wird, was für den Verarbeiter zu Zeiteinsparungen und zu einer Kostenreduktion führt. Weiterhin besitzen die hochgefüllten Epoxid-Giessharzzusammensetzungen noch die Eigenschaft, beispielsweise die Wicklungen der Sekundärspule eines Flyback Transformers zu imprägnieren. Aus diesem Grund wurde bisher ein geringerer Füllgrad gewählt, wobei die obengenannten, bedenklichen Additive zugegeben wurden, um die gewünschte Flammhemmung zu erzielen.

Gegenstand der vorliegenden Erfindung ist weiterhin die Verwendung der erfindungsgemässen Zusammensetzungen als Umhüllungsmaterial für elektrische und elektronische Bauteile, insbesondere für Flyback Transformer.

Die folgenden Beispiele illustrieren die Erfindung weiter.

Beispiel 1:

14,0 g Bisphenol-F-diglycidylether, 6,0 g Bisphenol-A-diglycidylether und 1,5 g Butandioldiglycidylether werden mit 65,2 g Aluminiumoxidtrihydrat (Apyral 2 E der Fa. VAW), 13,0 g reinem Quarzmehl und 0,3 g γ-Glycidyloxypropyltrimethoxysilan vermischt. Dann werden 18,8 g Methyltetrahydrophthalsäureanhydrid und 0,3 g Benzyldimethylamin zugegeben.

Die Giessharzmischung wird anschliessend bei 70 °C in Formen vergossen. Die Härtung der Mischung erfolgt wärhrend einer Stunde bei 90 °C und einer Stunde bei 110 °C.

Folgende Eigenschaften werden an der Giessharzmischung bzw. den Formkörpern gemessen:

| | | |
|---|---|---|
| Viskosität (Brookfield, 50 °C): | | 2400 Pa·s |
| Gelierzeiten | bei 90 °C: | 36 min |
| | bei 100 °C: | 19 min |
| Glasumwandlungstemperatur $T_g$ (Mettler DSC): | | 116 °C |
| Wasseraufnahme nach PCT | | |
| nach 1, 4 und 7 Tagen: | | 1,24 % / 2,24 % / 2,67 % |
| Biegefestigkeit (ISO 178, 25 °C): | | 86,9 $N/mm^2$ |
| Randfaserdehnung (ISO 178): | | 0,87 % |
| Zugfestigkeit (ISO R 527, 23 °C): | | 58,3 $N/mm^2$ |
| Zugdehnung (ISO R 527): | | 0,73 % |
| E-Modul [Zug] (ISO R 527): | | 11,01 $kN/mm^2$ |
| Wärmeleitfähigkeit (VDA, 25 °C): | | 1,13 $W \cdot m^{-1} \cdot K^{-1}$ |
| tan δ (IEC 250) | bei 25 °C und | |
| | 50 Hz / 1 kHz / 10 kHz: | 1,3 / 0,9 / 0,8 |
| | bei 70 °C und | |
| | 50 Hz / 1 kHz / 10 kHz: | 3,3 / 1,8 / 1,1 |
| $\epsilon_r$ | bei 25 °C und | |
| | 50 Hz / 1 kHz / 10 kHz: | 4,4 / 4,3 / 4,3 |

| | | |
|---|---|---|
| | bei 70 °C und | |
| | 50 Hz / 1 kHz / 10 kHz | 4,7 / 4,5 / 4,4 |
| tan δ nach Feuchtelagerung über 100 h bei 85 °C und 85 % rel. Luftfeuchtigkeit (IEC 250) | | |
| | bei 25 °C und | |
| | 50 Hz / 1 kHz / 10 kHz: | 5,9 / 3,1 / 2,1 |
| | bei 70 °C und | |
| | 50 Hz / 1 kHz / 10 kHz: | 16,5 / 6,9 / 3,8 |
| $\epsilon_r$ nach Feuchtelagerung über 100 h bei 85 °C und 85 % rel. Luftfeuchtigkeit (IEC 250) | | |
| | bei 25 °C und | |
| | 50 Hz / 1 kHz / 10 kHz: | 5,2 / 4,8 / 4,6 |
| | bei 70 °C und | |
| | 50 Hz / 1 kHz / 10 kHz: | 6,3 / 5,2 / 4,8 |
| Durchschlagfestigkeit | | |
| (IEC 243; 3 mm, 20 s Wert bei 22 °C): | | 16,9 kV/mm |
| Spezifischer Durchgangwiderstand (DIN 53482) | | |
| bei 25 °C / 75 °C / 125 °C: | | E15 / E15 / E15 |
| Flammhemmung (UL 94 (1,6 mm)): | | V-0 |

Beispiel 2:

16,3 g Bisphenol-F-diglycidylether, 7,0 g Bisphenol-A-diglycidylether und 5,8 g Butandioldiglycidylether werden mit 70,4 g Aluminiumoxidtrihydrat (Apyral 2 E der Fa. VAW), 0,3 g γ-Glycidyloxypropyltrimethoxysilan und 0,2 g eines organisch modifizierten Schichtsilikat (Bentone SD-2 der Fa. NL Chemicals) vermischt. Dann werden 11,0 g Bis(4-amino-3-methylcyclohexyl)methan zugegeben.

Die Giessharzmischung wird anschliessend bei 70 °C in Formen vergossen. Die Härtung der Mischung erfolgt während einer Stunde bei 70 °C und einer Stunde bei 110 °C.

Folgende Eigenschaften werden an der Giessharzmischung bzw. den Formkörpern gemessen:

| | | |
|---|---|---|
| Gelierzeiten | bei 60 °C: | 70 min |
| | bei 70 °C: | 40 min |
| Glasumwandlungstemperatur $T_g$ (Mettler DSC): | | 110 °C |
| Flammhemmung (UL 94 (1,6 mm)): | | V-0 |

**Patentansprüche**

1. Flammgehemmte Zusammensetzungen enthaltend
   A) ein Epoxidharzgemisch bestehend aus
      A1) 15-35 Gew.-% mindestens eines flüssigen Epoxidharzes,
      A2) 55-85 Gew.-% Aluminiumoxidtrihydrat,
      A3) 0-20 Gew.-% mindestens eines weiteren Füllstoffes,
      A4) 0-5 Gew.-% mindestens eines üblichen Additivs,
      und
   B) mindestens ein Carbonsäureanhydrid
   oder
   ein cycloaliphatisches Diamin der Formeln I oder II

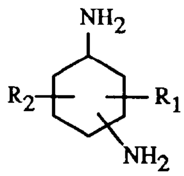 (I), 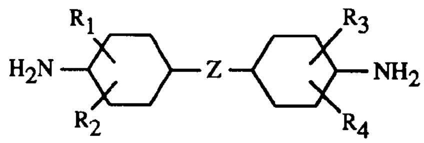 (II),

worin die Reste $R_1$ bis $R_4$ unabhängig voneinander Wasserstoff oder $C_1$-$C_4$-Alkyl bedeuten und Z für eine direkte Bindung, $-CH_2-$, $-C(CH_3)_2-$, -S-, -O-, $-SO_2-$ oder -CO- steht , in einer zur Härtung der Komponente A ausreichenden Menge,
wobei der Gehalt an Komponenten A2 und A3 zusammen 63-80 Gew.-%, bezogen auf das Gesamtgewicht der Zusammensetzung, beträgt.

**2.** Zusammensetzungen gemäss Anspruch 1, enthaltend als Komponente B ein Carbonsäureanhydrid in einer zur Härtung der Komponente A ausreichenden Menge.

**3.** Zusammensetzungen gemäss Anspruch 1, wobei der Anteil der Komponenten A2 und A3 zusammen 63-70 Gew.-%, bezogen auf das Gesamtgewicht der Zusammensetzung, beträgt.

**4.** Zusammensetzungen gemäss Anspruch 1, enthaltend als Komponente A eine Epoxidharzgemisch bestehend aus
A1) 18-30 Gew.-% mindestens eines flüssigen Epoxidharzes,
A2) 60-80 Gew.-% Aluminiumoxidtrihydrat,
A3) 0-15 Gew.-% mindestens eines weiteren Füllstoffes und
A4) 0-3 Gew.-% mindestens eines üblichen Additivs.

**5.** Zusammensetzungen gemäss Anspruch 1, enthaltend als Komponente A1 mindestens ein Epoxidharz auf der Basis eines Bisphenols.

**6.** Zusammensetzungen gemäss Anspruch 1, enthaltend als Komponente A1 ein Gemisch aus einem Bisphenol-A-diglycidylether, einem Bisphenol-F-diglycidylether und Butan-1, 4-diol-diglycidylether.

**7.** Zusammensetzungen gemäss Anspruch 1, enthaltend als Komponente A2 Aluminiumoxidtrihydrat mit einer Korngrösse von kleiner als 100 µm.

**8.** Zusammensetzungen gemäss Anspruch 1, enthaltend als Komponente A3 reines Quarzmehl.

**9.** Zusammensetzungen gemäss Anspruch 1, enthaltend als Komponente A4 einen Haftvermittler.

**10.** Zusammensetzungen gemäss Anspruch 9, enthaltend als Haftvermittler γ-Glycidoxypropyltrimethoxysilan.

**11.** Zusammensetzungen gemäss Anspruch 1, enthaltend als Komponente B ein cycloaliphatisches Carbonsäureanhydrid.

**12.** Zusammensetzung gemäss Anspruch 1, enthaltend als Komponente B ein cycloaliphatisches Diamin ausgewählt aus der Gruppe bestehend aus 1,2-Diaminocyclohexan, 1,4-Diaminocyclohexan, Bis(4-aminocyclohexyl)methan und Bis(4-amino-3-methylcyclohexyl)methan.

**13.** Zusammensetzungen gemäss Anspruch 12, enthaltend als Komponente B Bis(4-aminocyclohexyl)methan oder Bis(4-amino-3-methylcyclohexyl)methan.

**14.** Zusammensetzungen gemäss Anspruch 1, enthaltend zusätzlich
C) mindestens einen Härtungsbeschleuniger.

**15.** Zusammensetzungen gemäss Anspruch 14, wobei der Gehalt an Komponente C 0,05-5 Gew.-%, bezogen auf das Gesamtgewicht der Zusammensetzung, beträgt.

**16.** Verfähren zur Herstellung gehärteter Produkte unter Verwendung der Zusammensetzungen gemäss Anspruch 1.

17. Verwendung der Zusammensetzungen gemäss Anspruch 1 als Umhüllungsmaterial für elektrische und elektronische Bauteile.

Europäisches Patentamt

# EUROPÄISCHER RECHERCHENBERICHT

Nummer der Anmeldung
EP 92 81 0898

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | GB-A-1 337 952 (RAYCHEM)<br>* Ansprüche 1-32 * | 1-17 | C08L63/00<br>C08K3/22<br>H01B3/40<br>C08G59/42<br>C08G59/50 |
| X | US-A-3 563 939 (J.J.STEVENS ET AL.)<br>* Ansprüche 1-22 * | 1-17 | |
| X | FR-A-2 052 085 (UNION CARBIDE)<br>* Seite 16; Ansprüche 1-24 * | 1-17 | |
| X | EP-A-0 038 292 (CIBA-GEIGI)<br>* Seite 21; Ansprüche 1-13; Beispiel 18 * | 1-17 | |
| A | FR-A-1 476 082 (WESTINGHOUSE ELECTRIC CORP.) | | |
| A | CH-A-428 197 (CIBA) | | |
| A | DE-A-2 361 624 (CIBA GEIGY) | | |
| A | EP-A-0 385 949 (CIBA GEIGY) | | |
| A | DE-A-2 035 620 (UNION CARBIDE) | | RECHERCHIERTE SACHGEBIETE (Int. Cl.5 ) |
| A | EP-A-0 191 872 (MITSUBISHI DENKI K.K.) | | H01B<br>C08K<br>C08G |

Der vorliegende Recherchenbericht wurde für alle Patentansprüche erstellt

| Recherchenort | Abschlußdatum der Recherche | Prüfer |
|---|---|---|
| DEN HAAG | 30 MAERZ 1993 | STIENON P.M.E. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)